(19) Europäisches Patentamt / European Patent Office / Office européen des brevets

(11) **EP 1 249 698 B1**

(12) **EUROPÄISCHE PATENTSCHRIFT**

(45) Veröffentlichungstag und Bekanntmachung des Hinweises auf die Patenterteilung:
**23.09.2009 Patentblatt 2009/39**

(51) Int Cl.:
*G01N 21/55* *(2006.01)*

(21) Anmeldenummer: **02007334.2**

(22) Anmeldetag: **05.04.2002**

(54) **Reflektometeranordnung und Verfahren zur Bestimmung des Reflexionsvermögens eines Messobjekts**

Reflectometer arrangement and method of determining the reflectivity of an object

Réflectomètre et procédé de détermination du facteur de réflexion d'un objet

(84) Benannte Vertragsstaaten:
**AT BE CH CY DE DK ES FI FR GB GR IE IT LI LU MC NL PT SE TR**

(30) Priorität: **12.04.2001 DE 10119072**

(43) Veröffentlichungstag der Anmeldung:
**16.10.2002 Patentblatt 2002/42**

(73) Patentinhaber: **AIXUV GmbH**
**52074 Aachen (DE)**

(72) Erfinder:
- **Lebert, Rainer**
  **4721 Kelmis (BE)**
- **Aschke, Lutz**
  **55129 Mainz (DE)**
- **Heim, Ulf**
  **98693 Ilmenau (DE)**
- **Juschkin, Larissa**
  **52072 Aachen (DE)**

(74) Vertreter: **Freitag, Joachim et al**
**Patentanwälte**
**Oehmke & Kollegen**
**Neugasse 13**
**07743 Jena (DE)**

(56) Entgegenhaltungen:
**US-A- 4 436 426**

- **WINDT D L ET AL: "MULTILAYER FACILITIES REQUIRED FOR EXTREME-ULTRAVIOLET LITHOGRAPHY" JOURNAL OF VACUUM SCIENCE AND TECHNOLOGY: PART B, AMERICAN INSTITUTE OF PHYSICS. NEW YORK, US, Bd. 12, Nr. 6, 1. November 1994 (1994-11-01), Seiten 3826-3832, XP000497187 ISSN: 0734-211X**
- **CUI M ET AL: "Synchrotron radiation soft X-ray reflectometer and its physics results" NUCLEAR INSTRUMENTS & METHODS IN PHYSICS RESEARCH, SECTION - A: ACCELERATORS, SPECTROMETERS, DETECTORS AND ASSOCIATED EQUIPMENT, NORTH-HOLLAND PUBLISHING COMPANY. AMSTERDAM, NL, Bd. A359, Nr. 1, 1. Mai 1995 (1995-05-01), Seiten 151-154, XP004009361 ISSN: 0168-9002**
- **SCHRIEVER G ET AL: "LASER-PRODUCED LITHIUM PLASMA AS A NARROW-BAND EXTENDED ULTRAVIOLET RADIATION SOURCE FOR PHOTOELECTRON SPECTROSCOPY" APPLIED OPTICS, OPTICAL SOCIETY OF AMERICA, WASHINGTON, US, Bd. 37, Nr. 7, 1998, Seiten 1243-1248, XP000920796 ISSN: 0003-6935**

## Beschreibung

Die Erfindung betrifft eine Reflektometeranordnung zur Bestimmung des Reflexionsvermögens ausgewählter Messorte von spektral abhängig reflektierenden Messobjekten mit einer polychromatisch emittierenden Strahlungsquelle zur Bereitstellung eines Messstrahlenbündels, einem Messobjekt, auf das das Messstrahlenbündel der Strahlungsquelle über einen Multilayerspiegel und eine Blende gerichtet ist, und mit einem breitbandig empfindlichen Detektor zum Empfang von reflektierter Strahlung von dem ausgewählten Messort.
Des Weiteren betrifft die Erfindung ein Verfahren zur Bestimmung des Reflexionsvermögens ausgewählter Messorte von spektral abhängig reflektierenden Messobjekten, das unter Verwendung eines auf das Messobjekt gerichteten polychromatischen Messstrahlenbündels arbeitet.

Bevorzugte Messobjekte sind spektral abhängig reflektierende Oberflächen für Strahlung im extremen Ultraviolettbereich (EUV), welche die Reflektivitäten in einem schmalen Spektralbereich aufgrund ihres Schichtenaufbaus erreichen. Bis zu hundert Schichtenpaare verschiedener Materialien, wie z. B. abwechselnd Silizium und Molybdän, mit Schichtdicken im Bereich von wenigen Nanometern und Genauigkeiten von < 0,1 nm RMS sind dabei vorzusehen.

Der Herstellungsprozess für derartige Optiken erfordert insbesondere für deren Einsatz in der EUV-Lithographie aussagekräftige Qualitätskontrollen vor Ort, die mit einem hohen Durchsatz durchgeführt werden müssen. Es wird eine wellenlängenabhängige Bestimmung der maximalen Reflektivität und eine Ermittlung der Bandbreite der spektralen Reflexionskurve in engen Toleranzen verlangt. Typisch geforderte Genauigkeiten sind besser als 1%.

Da die Qualitätssicherung gewährleisten muss, dass das Produkt homogen in seinen Reflexionseigenschaften ausgebildet ist, sind Testmessungen zur Überprüfung der Konstanz der Messgrößen an möglichst vielen Stellen durchzuführen.

Soll z. B. eine Maske in der Größe von ca. 150 x 150 mm$^2$ mit einer Ortsauflösung von weniger als 0,2 mm$^2$ vermessen werden, erfordert eine vorgesehene Messzeit von einer Stunde eine Messfrequenz von mehr als 33 Hertz, also eine Messzeit von weniger als 30 Millisekunden für jeden einzelnen der ca. 120.000 Messpunkte.

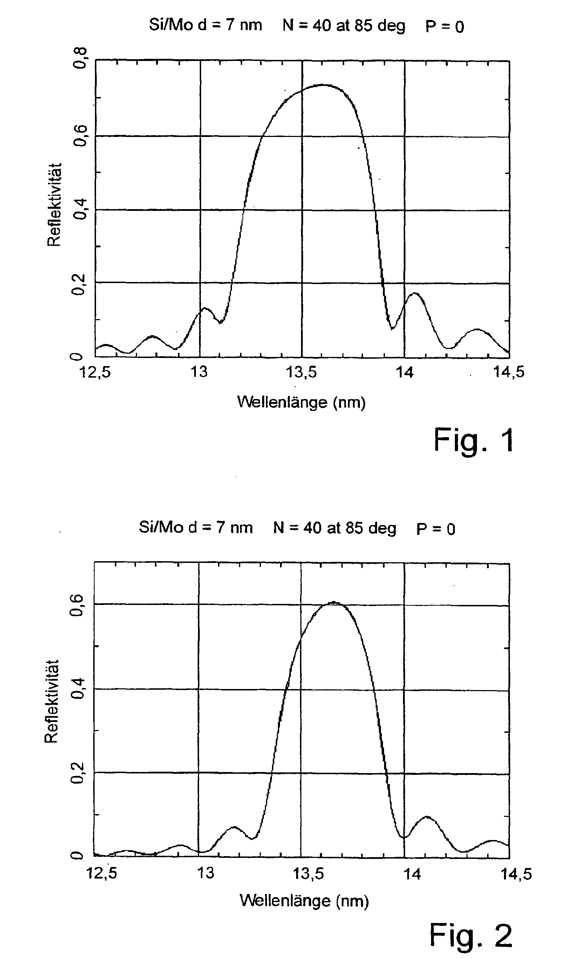

Bekanntermaßen erfolgt messtechnisch immer eine Aufnahme einer spektralen Reflexionskurve, durch deren Auswertung die interessierenden Kenngrößen gewonnen werden. Solche Reflexionskurven sind in den Figuren 1 und 2 enthalten, wobei der Kurvenverlauf in Fig. 1 einer "idealen" Multilayerbeschichtung für eine EUV-Strahlung von 13,5 nm bei einem Einfallswinkel von 5° entspricht. Abweichungen im Kurvenverlauf werden dann auftreten, wenn Fehler innerhalb der Beschichtung vorhanden sind, was in Fig. 2 zu einer Verschiebung der "Zentralwellenlänge" und der maximalen Reflektivität führt. Die dargestellte Veränderung entspricht einem Fehler in der Schichtdicke von 1% und 1 nm Interdiffusion.

Von den üblichen Methoden zur Aufnahme der Reflexionskurve, bei denen entweder die Wellenlänge bei konstantem Einfallswinkel (λ-Scan) oder der Einfallswinkel bei konstanter Wellenlänge (θ-Scan) variiert werden, ist der λ-Scan am aussagekräftigsten, da die Kenngrößen direkt abgelesen werden können.

Bekannt ist es, die spektrale Reflexion einer Probe, die sich aus dem Verhältnis von reflektiertem zu eingestrahltem spektralen Photonenfluss $I_R$ bzw. $I_0$ ergibt, mit Hilfe von Reflektometern zu bestimmen.

Bei einem monochromatischen Konzept, das auch an Synchrotrons Anwendung findet, wird die von einer polychromatischen Strahlungsquelle ausgehende Strahlung monochromatisiert auf ein Messobjekt gerichtet und die mit Hilfe eines einzelnen Detektors gemessene reflektierte Amplitude mit einer separat ermittelten Referenzamplitude verglichen [Windt, D. L. et al., "XUV Characterization Comparison of Mo/Si Multilayer Coating", in X-Ray/EUV Optics for Astronomy, Microscopy, Polarimetry, and Projection Lithography, Ed. by R. B. Hoover and A. B. C. Walker, jr., in Proceedings of SPIE 1343 (1991), p. 274] und
[Gullikson, E. M. et al., "A soft X-ray/EUV reflectometer based on a laser produced plasma source", Journal of X-Ray Science and Technology, Oct. 1992, vol. 3; (no 4), 283 - 299].

Mit einer polychromatischen Strahlungsquelle, einem Monochromator und einem einzelnen Detektor arbeiten auch Windt, D. L. et al., J. Vac. Sci. Technol. B12 (1994) 3826-3832 und Mingqi, C. et al., Nucl. Instr, and Meth. in Phys. Res. A359 (1995) 151-154.

Der für alle notwendigen Wellenlängen (λ-Scan) oder Einfallswinkel auf die Probe (θ-Scan) zu wiederholende Vorgang erfordert bis zu einhundert spektrale Messpunkte pro ausgewähltem Ort auf dem Messobjekt und stellt hohe Leistungsanforderungen an die Strahlungsquelle, um einen ausreichenden Photonenfluss pro spektralem Messintervall zu erreichen. Typische Messzeiten liegen im Bereich von einer Minute pro Ort, weshalb dieses Konzept keine effektive Qualitätskontrolle für eine Serienfertigung darstellt.
Ein an Laborstrahlungsquellen besser angepasster polychromatischer Ansatz sieht vor, das Messobjekt breitbandig zu bestrahlen und die reflektierte Strahlung mit einem Spektrographen zu zerlegen, bevor ein Zeilen- oder Flächenempfänger die verschiedenen Wellenlängen parallel aufnimmt [G. Schriever et. al., J. Appl. Optics, Heft 37, Nr. 7, S. 1243 (1998)].
Der Nachteil liegt im Zeitbedarf für das Auslesen des Zeilen- oder Flächenempfängers.

Die unabhängig vom angewandten Konzept nach dem Stand der Technik immer erfolgende Aufnahme der spektralen Reflexionskurve erhöht in nachteiliger Weise den apparativen Aufwand und beeinträchtigt den Durchsatz durch zeitaufwendige Messungen erheblich. Der letztere Nachteil tritt in besonderem Maße dann ein, wenn die Messungen in wünschenswerter Weise vor Ort durchgeführt werden sollen. Da die hierzu erforderlichen kompakten Labor- oder portablen Strahlungsquellen im Gegensatz zu einem Synchrotron erhebliche Nachteile in der Strahlqualität, insbesondere der spektralen Brillanz, aufweisen, wird jeder Versuch einer vollständigen Charakterisierung eines größeren Messobjektes behindert.

Aufgabe der Erfindung ist es deshalb, die Zeit zur Vermessung eines Messobjektes mit einem robusten, einfachen Messaufbau soweit zu senken, dass kompakte Strahlungsquellen mit einer gegenüber einem Synchrotron vergleichsweise niedrigen Leistung am Ort der Herstellung oder des Einsatzes des Messobjektes zur Charakterisierung der Objekteigenschaften in einer für die Serienproduktion angepassten Weise zum Einsatz kommen können.

Gemäß der Erfindung wird diese Aufgabe durch eine Reflektometeranordnung der eingangs genannten Art dadurch gelöst, dass für das Messobjekt eine angestrebte Soll-Reflexionskurve vorgegeben ist und das Messobjekt eine Ist-Reflexionskurve aufweist, deren Abweichungen von der Soll-Reflexionskurve zu ermitteln ist, dass der Multilayerspiegel der Strahlungsquelle nachgeordnet ist, wobei das Messstrahlenbündel mit einer spektralen Soll-Reflexionskurve des Multilayerspiegels, die der für das Messobjekt angestrebten Reflexionskurve entspricht, gefiltert ist, und dass der Detektor ein über die Wellenlänge integriertes Ausgangssignal aufweist, wobei für jeden ausgewählten Messort des Messobjekts die reflektierte Strahlung als ein einziges Mess-Intensitätssignal aufgenommen wird.

Vorzugsweise weist der Multilayerspiegel einen Sollwert in der Zentralwellenlänge, bei der maximalen Reflektivität sowie der Bandbreite und somit eine spektrale Referenz-Reflexionskurve für die angestrebte Soll-Reflexionskurve des Messobjekts auf.

Dabei ist vorteilhaft ein weiterer, ein Referenz-Intensitätssignal erzeugender Detektor vorgesehen, der dem Multilayerspiegel in einem Teilbündel des gefilterten Messstrahlenbündel nachgeordnet ist.

Messobjekte können EUV-Maskenblanks, eine EUV-Maske oder Multilayerspiegel sein.

Bevorzugte Strahlungsquellen sind gepulste Laborstrahlungsquellen, die auf laser- oder entladungserzeugten Plasmen basieren können. Besonders geeignet ist auch eine Pinchplasmaquelle.

Obwohl die Messungen mit der erfindungsgemäßen Anordnung vorwiegend mit Laborstrahlungsquellen erfolgen sollen, ist die Verwendung eines Synchrotrons selbstverständlich nicht ausgeschlossen.

Gegenstand der Erfindung ist weiterhin ein Verfahren zur Bestimmung des Reflexionsvermögens ausgewählter Messorte von spektral abhängig reflektierenden Messobjekten unter Verwendung eines auf das Messobjekt gerichteten polychromatischen Messstrahlenbizndels, bei welchem dem Messstrahlenbündel durch eine spektrale Filterung an einem Multilayerspiegel, der eine für das Messobjekt angestrebte Soll-Reflexionskurve aufweist, Information über die angestrebte Soll-Reflexionskurve des Messobjektes aufgeprägt wird, wonach das gefilterte Messstrahlenbündel sequenziell auf die Messorte des Messobjektes gerichtet und von jedem Messort die reflektierte Strahlung integral über die Wellenlänge nachgewiesen und ein einziges Mess-Intensitätssignal gebildet wird.

Besonders vorteilhaft ist es, wenn aus einem Teil des gefilterten Messstrahlenbündels ein zur Strahlungsmenge, die auf das Messobjekt fällt, proportionales Referenz-Intensitätssignal und aus dem Mess-Intensitätssignal und dem Referenz-Intensitätssignal ein Verhältniswert als Qualitätsmaß für das Reflexionsvermögen gebildet werden.

Durch die Aufbereitung des Messstrahlenbündels mittels Aufprägung einer Soll-Reflexionskurve wird das in integraler Weise gemessene und als Maß für die Übereinstimmung zwischen Soll- und Ist-Eigenschaften dienende Signal der reflektierten Strahlung extrem empfindlich gegenüber Unterschieden bei den Reflexionseigenschaften der einzelnen Messpunkte.

Anstatt aufwendig die genaue spektrale Reflexionskurve zu vermessen und umständlich auszuwerten, genügt ein einfacher Detektor (z. B. eine Photodiode) zur Signalaufnahme, womit das Gesamtsystem einfach, kompakt im Aufbau und schnell wird. Darüber hinaus nutzt das Konzept alle von der Strahlungsquelle in der Messbandbreite emittierten Photonen zur Messung, woraus extrem kurze Messzeiten resultieren und sich eine Steigerung der Empfindlichkeit um einen Faktor 100 gegenüber dem polychromatischen Ansatz und um einen Faktor 10.000 gegenüber dem monochromatischen Konzept ergibt. Dadurch ist es möglich, einen einzelnen örtlichen Messpunkt mit einem einzelnen Puls einer typischen EUV-Laborstrahlungsquelle zu vermessen.

Die Erfindung soll nachstehend anhand der schematischen Zeichnung näher erläutert werden. Es zeigen:

Fig. 1    eine spektrale Reflexionskurve einer "idealen" Multilayerbeschichtung für eine EUV-Strahlung von 13,5 nm und 5° Einfallswinkel

Fig. 2    eine spektrale Reflexionskurve einer Multilayerbeschichtung für EUV-Strahlung bei einem Schichtdickenfehler von 1 % und 1 nm Interdiffusion.

Fig. 3    eine erfindungsgemäße Reflektometeranordnung zur Vermessung hochreflektierender Oberflächen

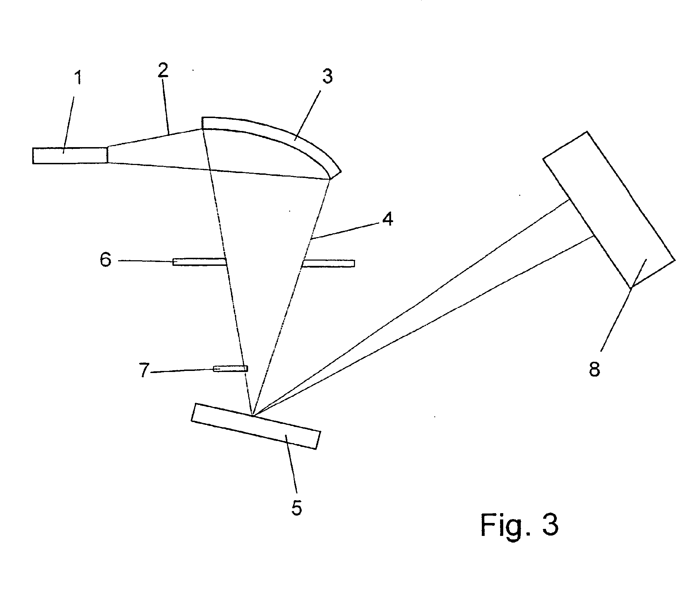

Gemäß Fig. 3 ist Strahlung einer im extremen Ultraviolett polychromatisch emittierenden Strahlungsquelle 1 (EUV-Strahlungsquelle), die als gepulste Laborstrahlungsquelle z. B. auf der Basis eines lasererzeugten Plasmas (LLP) oder eines entladungserzeugten Plasmas beruhen kann, als Messstrahlenbündel 2 auf ein im Strahlengang nachgeordnetes Reflexionselement in Form eines Multilayerspiegels 3 mit spektralen Soll-Reflexionseigenschaften gerichtet. Dieser modifiziert das Messstrahlenbündel 2 zu einem Messstrahlenbündel 4 und kann entweder plan ausgebildet sein oder als gekrümmter Spiegel den Strahlungsfluss auf ein Messobjekt 5 erhöhen bzw. für vorteilhafte Geometrieänderungen des modifizierten Messstrahlenbündels 4 genutzt werden.

Abweichend von dem bevorzugten Einsatz von Laborstrahlungsquellen ist es bei Bedarf auch möglich, die Strahlung eines Synchrotrons als Messstrahlenbündel 2 zu verwenden.

Eine zwischen dem Multilayerspiegel 3 und dem Messobjekt 5 angeordnete Blende 6 sorgt dafür, dass auf dem Messobjekt 5 nur ein ausgewählter zu vermessender Bereich als Messort durch das modifizierte Messstrahlenbündel 4 bestrahlt wird. Selbstverständlich ist es für diesen Zweck auch möglich, die Fokussierung des in geeigneter Weise gekrümmten Multilayerspiegels 3 oder andere EUV-optische Elemente auszunutzen.

Da die von der Strahlungsquelle 1 ausgesendeten Impulse in der Intensität fluktuieren können (etwa 2% - 5%), ist ein sogenannter Strahlmonitor 7 vorgesehen, der zur Bestimmung der Menge der auf das Messobjekt 5 einfallenden Strahlung dient. Dabei handelt es sich um einen EUV-empfindlichen Detektor, wie z. B. eine Photodiode, die mit einem Teil des modifizierten Messstrahlenbündels 4, der vorteilhafterweise nach der Reflexion an dem Multilayerspiegel 3 entnommen ist, bestrahlt wird und deren erzeugtes Signal als Referenzsignal proportional zu der Strahlungsmenge ist, die auf das Messobjekt 5 fällt. Möglich ist auch die Nutzung anderer Messprinzipien, wie z. B. der Nachweis von Photoelektronen.

Die von dem Messobjekt 5 reflektierte Strahlungsmenge ist zur Ableitung eines Messsignals in Form eines einzigen Intensitätssignals auf einen Detektor 8 gerichtet, der als EUV-empfindliche Photodiode oder EUV-empfindliche CCD-Kamera dem Messobjekt 5 im Strahlengang nachgeordnet ist und der es auch erlaubt, weitere Informationen über das Messobjekt 5 zu erhalten (z. B. Streulicht).

Aufgrund des gepulsten Betriebes der Strahlungsquelle 1 kann das zu untersuchende Messobjekt 5 zur Auswahl der Messorte kontinuierlich mit einer Geschwindigkeit von

$$V = \Delta x \bullet R_Q$$

($\Delta x$: geforderte Ortsauflösung, $R_Q$ : Repetitionsrate der Strahlungsquelle [Hz]) verfahren werden.

Würde die von der Strahlungsquelle ausgehende polychromatische Strahlung direkt auf das Messobjekt 5 gerichtet sein, würde man bei jedem Emissionspuls der Strahlungsquelle 1 ein Spannungssignal am Detektor 8 erhalten, das sich aus der spektralen Verteilung der eingestrahlten Leistung ($\Theta(\lambda)$), der spektralen Reflexionskurve ($R(\lambda)$) und der Empfindlichkeit der zum Einsatz kommenden Photodiode ($c_{Diode}$) zu

$$S_{Mess} = c_{Diode} \cdot \int_0^\infty \Theta_Q(\lambda) \cdot R(\lambda) d\lambda$$

ergibt.

Während das mit dem Strahlmonitor 7 vermessene Referenzsignal proportional zum Integral

$$S_{Ref} = c_{Ref} \cdot \int_0^\infty \Theta_Q(\lambda) d\lambda$$

der einfallenden Strahlungsleistung der Strahlungsquelle 1 ist, ist der Quotient aus beiden Messgrößen proportional zum Integral über die spektrale Reflexionskurve gewichtet mit der Emissionscharakteristik der Strahlungsquelle 1.

Um eine verlässliche Aussage über die Parameter der Reflexion des Messobjektes 5 zu erhalten, wird das Messergebnis durch eine Filterung des Messstrahlenbündels 2 gewichtet, indem diesem bereits die Information über die angestrebte Reflexionskurve aufgeprägt wird.

Das wird bei der Erfindung mit Hilfe des Multilayerspiegels 3 erreicht, der mit einem jeweiligen Sollwert in der Zentralwellenlänge, bei der maximalen Reflektivität sowie der Bandbreite reflektiert und so eine spektrale Referenz - Reflexionskurve $R_{Ref}(\lambda)$ besitzt. Infolge der Modifizierung von Messsignal $S_{Mess}$ und Referenzsignal $S_{Ref}$ durch die Referenz - Reflexionskurve $R_{Ref}(\lambda)$

$$S_{Mess} = c_{Diode} \cdot \int_0^\infty \Theta_Q(\lambda) \cdot R(\lambda) \cdot R_{Ref}(\lambda) \, d\lambda$$

und

$$S_{Ref} = c_{Ref} \cdot \int_0^\infty \Theta_Q(\lambda) \cdot R_{Ref}(\lambda) \, d\lambda$$

wird das Verhältnis der skalaren Größen der beiden Intensitätssignale $S_{Mess}$ und $S_{Ref}$ höchst sensitiv auf jeden Fehler in dem untersuchten Messobjekt 5, unabhängig vom Verhalten der Strahlungsquelle 1. Im Gegensatz zum monochromatischen Konzept, bei dem die aus einer Häufung von skalaren Messwerten bestehende spektrale Reflexionskurve für jeden Messort einem langwierigen Auswerteprozess unterzogen werden muss, liegt die qualitätsbestimmende Aussage bei der Erfindung praktisch sofort für jeden Messort mit dem integral ermittelten Messwert vor, wobei die Qualität mit größer werdendem Messwert steigt. Die absolute Wertgröße kann zusätzlich an einer Probe kalibriert oder für den speziellen Aufbau berechnet werden.

Unter der Voraussetzung, dass die zu untersuchenden Messobjekte 5 an sich einen hohen Qualitätsstandard aufweisen, kann jedoch auf eine Kalibrierung verzichtet werden. Das trifft insbesondere bei einer Zielstellung zu, bei der die Homogenität der Reflexionseigenschaften einer reflektierenden Oberfläche, wie z. B. die eines Maskenblanks zu verifizieren ist und bei der es ausreichend ist, nach Messorten mit starken Abweichungen zu suchen.

Dafür eignet sich die Erfindung besonders gut, da das Messsignal stark auf eine Variation der Zentralwellenlänge reagiert, indem 2% Messgenauigkeit ausreichend sind, um eine 0,2%ige Abweichung in der Zentralwellenlänge zu detektieren. 0,5% Abweichung in der Zentralwellenlänge führen bereits zu einer Änderung des Messsignals um 11,8%. Variiert die Bandbreite um einen Wert von x%, so verändert sich das Messsignal um x/2%. Bei Schwankungen der Maximalreflektivität reagiert das Messsignal linear, d.h. auf x% Schwankung mit einer x-prozentigen Variation des Messsignals.

Die Reflexionskurven nach Fig. 1 und 2 ergeben bei einer erfindungsgemäßen Messung eine Signalreduzierung um 33,4%. Um das Rauschen des Messsignals klein zu halten, müssen im Messintervall mindestens $10^8$ Photonen gemessen werden, was bei einer mittleren Reflektivität von 25% ca. $4 \times 10^8$ von der Strahlungsquelle 1 auf das Messobjekt 5 eingestrahlte Photonen erfordert, was einer Leistung der als ausgebildeten EUV-Quelle Strahlungsquelle 1 von ca. 200 nW entspricht. Bei typischen Leistungen verfügbarer EUV-Quellen von 25 mW/sr/2% Bandbreite genügt ein genutzter Raumwinkel von $10^{-5}$ sr, also ein genutzter Öffnungswinkel von < 0,2 Grad.

## Patentansprüche

1.    Reflektometeranordnung zur Bestimmung des Reflexionsvermögens ausgewählter Messorte von spektral abhängig reflektierenden Messobjekten mit einer polychromatisch emittierenden Strahlungsquelle (1) zur Bereitstellung eines Messstrahlenbündels (2), einem Messobjekt (5), auf das das Messstrahlenbündel der Strahlungsquelle (1) über einen Multilayerspiegel (3) und eine Blende (6) gerichtet ist, und mit einem breitbandig empfindlichen Detektor (8) zum Empfang von reflektierter Strahlung von dem ausgewählten Messort, **dadurch gekennzeichnet, dass**

    - für das Messobjekt (5) eine angestrebte Soll-Reflexionskurve vorgegeben ist und das Messobjekt (5) eine Ist-Reflexionskurve aufweist, deren Abweichungen von der angestrebten Reflexionskurve zu bestimmen ist,
    - der Multilayerspiegel (3) der Strahlungsquelle (1) nachgeordnet ist, wobei das Messstrahlenbündel (2) mit einer spektralen Soll-Reflexionskurve des Multilayerspiegels (3), die der für das Messobjekt (5) angestrebten Reflexionskurve entspricht, gefiltert ist, und
    - der Detektor (8) ein über die Wellenlänge integriertes Ausgangssignal aufweist, wobei für jeden ausgewählten Messort des Messobjekts (5) die reflektierte Strahlung als ein einziges Mess-Intensitätssignal aufgenommen wird.

2.    Reflektometeranordnung nach Anspruch 1, **dadurch gekennzeichnet, dass** der Multilayerspiegel (3) einen Sollwert in der Zentralwellenlänge, bei der maximalen Reflektivität sowie der Bandbreite und somit eine spektrale Referenz-Reflexionskurve für die angestrebte Soll-Reflexionskurve des Messobjekts (5) aufweist.

3.    Reflektometeranordnung nach Anspruch 1 oder 2, **dadurch gekennzeichnet, dass** ein weiterer, ein Referenz-Intensitätssignal erzeugender Detektor (7) vorgesehen ist, der dem Multilayerspiegel (3) in einem Teilbündel des gefilterten Messstrahlenbündels (4) nachgeordnet ist.

4.    Reflektometeranordnung nach Anspruch 1, 2 oder 3, **dadurch gekennzeichnet, dass** die Strahlungsquelle (1) eine gepulste Laborstrahlungsquelle ist.

5.    Reflektometeranordnung nach Anspruch 4, **dadurch gekennzeichnet, dass** die Strahlungsquelle (1) auf einem lasererzeugten Plasma basiert.

6.    Reflektometeranordnung nach Anspruch 4, **dadurch gekennzeichnet, dass** die Strahlungsquelle (1) auf einem entladungserzeugten Plasma basiert.

7.    Reflektometeranordnung nach Anspruch 6, **dadurch gekennzeichnet, dass** die Strahlungsquelle (1) eine Pinchplasmaquelle ist.

8.    Reflektometeranordnung nach Anspruch 1, 2 oder 3, **dadurch gekennzeichnet, dass** die Strahlungsquelle (1) ein Synchrotron ist.

9.    Verfahren zur Bestimmung des Reflexionsvermögens ausgewählter Messorte von spektral abhängig reflektierenden Messobjekten unter Verwendung eines auf das Messobjekt gerichteten polychromati-

schen Messstrahlenbündels, **dadurch gekenn-zeichnet, dass**

dem Messstrahlenbündel (2) durch eine spektrale Filterung an einem Multilayerspiegel (3), der eine für das Messobjekt (5) angestrebte Soll-Reflexionskurve aufweist, Information über die angestrebte Soll-Reflexionskurve des Messobjektes (5) aufgeprägt wird, wonach das gefilterte Messstrahlenbündel (4) sequenziell auf die Messorte des Messobjektes (5) gerichtet und die reflektierte Strahlung von jedem Messort integral über die Wellenlänge nachgewiesen und ein einziges Mess-Intensitätssignal gebildet wird.

10. Verfahren nach Anspruch 9, **dadurch gekennzeichnet, dass** aus einem Teil des gefilterten Messstrahlenbündels (4) ein zur Strahlungsmenge, die auf das Messobjekt (5) fällt, proportionales Referenz-Intensitätssignal und aus dem Mess-Intensitätssignal und dem Referenz-Intensitätssignal ein Verhältniswert als Qualitätsmaß für das Reflexionsvermögen gebildet werden.

## Claims

1. Reflectometer arrangement for determining the reflectivity of selected sites of measurement of measurement objects that reflect in a spectrally dependent manner, with a polychromatically emitting radiation source (1) for providing a measurement beam (2), a measurement object (5) at which the measurement beam from the radiation source (1) is directed via a multilayer mirror (3) and a diaphragm (6), and with a detector (8) for receiving reflected radiation from the selected site of measurement, said detector (8) having broadband sensitivity,
**characterized in that**

- an intended target reflection curve is predetermined for the measurement object (5) and the measurement object (5) has an actual reflection curve whose deviations from the intended reflection curve are to be determined;
- the multilayer mirror (3) is arranged following the radiation source (1), the measurement beam (2) being filtered with a spectral target reflection curve of the multilayer mirror (3), said curve corresponding to the reflection curve intended for the measurement object (5), and
- the detector (8) has an output signal that is integrated via the wavelength, the reflected radiation for each selected site of measurement on the measurement object (5) being recorded as a single measurement intensity signal.

2. Reflectometer arrangement according to claim 1, **characterized in that** the multilayer mirror (3) has a target value at the central wavelength, at the maximum reflectivity as well as the bandwidth, and thus has a spectral reference reflection curve for the intended target reflection curve of the measurement object (5).

3. Reflectometer arrangement according to claim 1 or 2, **characterized in that** a further detector (7) generating a reference intensity signal is provided, said detector (7) being arranged following the multilayer mirror (3) in a partial beam of the filtered measurement beam (4).

4. Reflectometer arrangement according to claim 1, 2, or 3, **characterized in that** the radiation source (1) is a pulsed radiation source used in laboratories.

5. Reflectometer arrangement according to claim 4, **characterized in that** the radiation source (1) is based on a laser-generated plasma.

6. Reflectometer arrangement according to claim 4, **characterized in that** the radiation source (1) is based on a discharge-generated plasma.

7. Reflectometer arrangement according to claim 6, **characterized in that** the radiation source (1) is a pinch plasma source.

8. Reflectometer arrangement according to claim 1, 2, or 3, **characterized in that** the radiation source (1) is a synchrotron.

9. Method for determining the reflectivity of selected sites of measurement on measurement objects that reflect in a spectrally dependent manner, using a polychromatic measurement beam that is directed at the measurement object,
**characterized in that**
information concerning the intended target reflection curve of the measurement object (5) is imposed on the measurement beam (2) by spectral filtering at a multilayer mirror (3), which has a target reflection curve that is intended for the measurement object (5), according to which information the filtered measurement beam (4) is sequentially directed at the sites of measurement on the measurement object (5), and the reflected radiation from each site of measurement is integrally detected via the wavelength, and one single measurement intensity signal is formed.

10. Method according to claim 9, **characterized in that** part of the filtered measurement beam (4) is used to form a reference intensity signal that is proportional to the amount of radiation incident on the measurement object (5), and the measurement intensity signal and the reference intensity signal are used to form a ratio that is a quality index for reflectivity.

**Revendications**

1. Réflectomètre destiné à déterminer la réflectivité d'endroits de mesure sélectionnés d'objets de mesure qui réfléchissent de manière spectralement dépendante, avec une source de rayonnement (1) à émission polychromatique destinée à fournir un faisceau de mesure (2), avec un objet de mesure (5) vers lequel ledit faisceau de mesure de la source de rayonnement (1) est dirigé par un miroir multicouche (3) et un diaphragme (6), et avec un détecteur (8) présentant une sensibilité large bande pour recevoir du rayonnement réfléchi à partir de l'endroit de mesure sélectionné,
   **caractérisé en ce que**

   - une courbe de réflexion prescrite visée est donnée pour l'objet de mesure (5), et l'objet de mesure (5) présente une courbe de réflexion réelle dont il faut déterminer les déviations de la courbe de réflexion visée;
   - le miroir multicouche (3) est disposé en aval de la source de rayonnement (1), le faisceau de mesure (2) étant filtré avec une courbe de réflexion prescrite spectrale du miroir multicouche (3), cette courbe correspondant à la courbe de réflexion visée pour l'objet de mesure (5), et
   - le détecteur (8) présente un signal de sortie qui est intégré par la longueur d'ondes, et pour chaque endroit de mesure sélectionné de l'objet de mesure (5), le rayonnement réfléchi est enregistré sous forme d'un seul signal d'intensité de mesure.

2. Réflectomètre selon la revendication 1, **caractérisé en ce que** le miroir multicouche (3) présente une valeur prescrite à la longueur d'ondes centrale, à la réflectivité maximale ainsi que la largeur de bande, et il présente ainsi une courbe spectrale de réflexion de référence pour la courbe de réflexion prescrite visée de l'objet de mesure (5).

3. Réflectomètre selon la revendication 1 ou 2, **caractérisé en ce que** l'on prévoit un détecteur (7) additionnel qui engendre un signal d'intensité de référence est qui est disposé en aval du miroir multicouche (3), dans un faisceau partiel du faisceau de mesure (4) filtré.

4. Réflectomètre selon la revendication 1, 2, ou 3, **caractérisé en ce que** la source de rayonnement (1) est une source de rayonnement à impulsions utilisée dans un laboratoire.

5. Réflectomètre selon la revendication 4, **caractérisé en ce que** la source de rayonnement (1) est basée sur un plasma engendré par laser.

6. Réflectomètre selon la revendication 4, **caractérisé en ce que** la source de rayonnement (1) est basée sur un plasma engendré par décharge.

7. Réflectomètre selon la revendication 6, **caractérisé en ce que** la source de rayonnement (1) est une source de plasma à striction.

8. Réflectomètre selon la revendication 1, 2, ou 3, **caractérisé en ce que** la source de rayonnement (1) est un synchrotron.

9. Procédé pour déterminer la réflectivité d'endroits de mesure sélectionnés d'objets de mesures qui réfléchissent de manière spectralement dépendante, utilisant un faisceau de mesure polychromatique qui est dirigée vers l'objet de mesure,
   **caractérisé en ce que**
   de l'information sur la courbe de réflexion prescrite visée de l'objet de mesure (5) est imposée au faisceau de mesure (2) par filtrage spectral à un miroir multicouche (3), qui présente une courbe de réflexion prescrite qui est visée pour l'objet de mesure (5), ladite information étant utilisée pour diriger séquentiellement le faisceau de mesure (4) filtré vers les endroits de mesure de l'objet de mesure (5), et le rayonnement réfléchi de chaque endroit de mesure est détecté intégralement par la longueur d'ondes, et un seul signal d'intensité de mesure est formé.

10. Procédé selon la revendication 9, **caractérisé en ce qu'**une partie du faisceau de mesure (4) filtré est utilisée pour former un signal d'intensité de référence qui est proportionnel à la quantité de rayonnement incident sur l'objet de mesure (5), et les signaux d'intensité de mesure et d'intensité de référence sont utilisés pour donner un rapport qui est un indice de qualité pour la réflectivité.

Si/Mo d = 7 nm    N = 40 at 85 deg    P = 0

Fig. 1

Si/Mo d = 7 nm    N = 40 at 85 deg    P = 0

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- XUV Characterization Comparison of Mo/Si Multilayer Coating. **Windt, D. L. et al.** X-Ray/EUV Optics for Astronomy, Microscopy, Polarimetry, and Projection Lithography. Proceedings of SPIE, 1991, 274
- **Gullikson, E. M. et al.** A soft X-ray/EUV reflectometer based on a laser produced plasma source. *Journal of X-Ray Science and Technology,* 1992, vol. 3 (4), 283-299
- **Windt, D. L. et al.** *J. Vac. Sci. Technol.,* 1994, 3826-3832
- **Mingqi, C. et al.** *Nucl. Instr, and Meth. in Phys. Res.,* 1995, 151-154
- **G. Schriever.** *J. Appl. Optics,* 1998, (7), 1243